# EUROPEAN PATENT APPLICATION

(11) **EP 4 576 826 A1**
(43) Date of publication of application: **25.06.2025**
(21) Application number: 23219809.3
(22) Date of filing: 22.12.2023
(51) Int. Cl.: H04R 25/00

(54) **HEARING DEVICE AND METHOD OF PROVIDING BROADCASTED AUDIO STREAM**

(71) Applicant: GN Hearing A/S, 2750 Ballerup (DK)
(72) Inventor: Umicevic, Daniel, 2870 Dyssegård (DK)
(74) Representative: GN Store Nord A/S

(57) **Abstract**

The present disclosure relates to a hearing device configured for being worn at an ear of a user. The hearing device comprises an input transducer, a processing unit, an output transducer, a movement sensor configured for obtaining movement data indicative of user movement, an antenna, and a wireless communication unit coupled to the antenna. The hearing device is configured to initiate a scanning for advertisements of available broadcasted audio streams. The scanning for advertisements is initiated based on the movement data.

## Description

The present disclosure relates to a method of providing a broadcasted audio stream, and a hearing device comprising a wireless communication unit configured to scan for advertisements of available broadcasted audio streams and an associated audio streaming protocol.

### BACKGROUND OF THE INVENTION

The advent of digital technology has revolutionized the way we consume audio content. Be it music or podcasts, or simply information streams guiding us to our destination, the demand for audio streaming services has grown rapidly. At the same time, assistive listening technologies for people with hearing difficulties has aimed at improving the ability of people with hearing loss to participate, move and generally orient themselves in their acoustic environment. This has led to the development of various devices and methods to facilitate the delivery of audio content to the end-user.

A broadcasted audio stream is an audio stream that is provided by as a wireless signal by a broadcast device. The audio stream is provided using a broadcast standard, which means that it does not require pairing between broadcast device and receiving device. Thus, the technology of broadcasted audio streams is envisioned to allow a hearing device user to select audio stream(s) to listen to without requiring an arduous pairing process with each broadcasting device.

There is thus a need for an improved method of providing a broadcasted audio stream using a hearing device configured for being worn at an ear of a user.

It is further an object to provide a hearing device with increased functionality in terms of listening to broadcasted audio streams.

### SUMMARY OF THE INVENTION

**In the first aspect,** a hearing device configured for being worn at an ear of a user is disclosed. The hearing device comprises an input transducer, a processing unit, an output transducer, a movement sensor configured for obtaining movement data indicative of user movement, an antenna, and a wireless communication unit coupled to the antenna. The hearing device is configured to initiate a scanning for advertisements of available broadcasted audio streams. The scanning for advertisements is initiated based on the movement data.

**In the second aspect,** a method of providing a broadcasted audio stream using a hearing device configured for being worn at an ear of a user is disclosed. The method comprises detecting movement of the user, using a movement sensor in the hearing device, for the provision of movement data indicative of user movement. The method comprises scanning for advertisements of available broadcasted audio streams. The scanning for advertisements is initiated based on the movement data.

**In the third aspect,** a hearing system comprising a hearing device according to the first aspect and an assistance device. The hearing device and the assistance device being configured for being wirelessly connected to each other.

It is an advantage of the disclosure that the hearing device may obtain information on available broadcasted audio streams without continuously scanning, a process which is very costly in terms of battery power, and which would deplete the battery of the hearing device at a rate that would be impractical. This is even more advantageous for hearing devices, such as hearing aids, where miniaturization is pushed to the limit which also limits the size of the battery it can fit, thus making it impossible to perform continuously scanning.

Another advantage of the disclosure is that the hearing device may maintain connection to a particular audio stream broadcasted by multiple broadcast devices spaced apart, as the monitoring of movement of the user facilitates handover between the broadcast devices as the user moves between the coverage zones of the broadcast devices. An example of such a situation may be a user listening to an information broadcast stream in an airport while moving to/from their gate. As the user changes location, the hearing device may detect this movement and initiate a scan to check if the user's new location has a broadcasting device broadcasting the information stream with better coverage of the user's new location than the broadcasting device the hearing device was previously listening to.

A broadcasted audio stream is an audio stream that is provided by as a wireless signal by a broadcast device. The audio stream is provided using a broadcast standard, which means that it does not require pairing between broadcast device and receiving device. As an example, some versions of Bluetooth LE audio sharing allow multi-stream and broadcast audio features, and these features are being referred to as Auracast. Thus, in some embodiments, the associated audio streaming protocol is a Bluetooth audio streaming protocol, such as Bluetooth LE Audio.

A broadcasted audio stream may be encrypted such that a security step, e.g., entry of a password, may be required in order for a receiving device to be able to provide the audio stream to its user. In the case of unencrypted broadcasted audio streams, any device configured for receiving the audio stream may listen in. Whether the audio stream is encrypted or unencrypted the broadcast device may transmit the audio signal without knowing how many receiving devices, if any, are listening in on the broadcast.

A broadcast device advertises the availability of an audio stream, and usually also the audio streaming protocol used for the broadcasting, i.e., the audio streaming protocol associated with the audio stream. The advertisement provides the transmission data for receiving devices, such as e.g., name of audio stream, content, configuration, etc. Thus, the broadcast device transmits an advertisement of each audio stream provided by it as well as the audio stream. A broadcasted audio stream may comprise a left and a right stereo audio stream.

In all aspects of the disclosure, the hearing device is configured to be wirelessly connected to an assistance device, such as a smart device, e.g., a smart phone, or a computer. The hearing device may connect to a broadcast device either directly, i.e., without an intermediate device relaying a broadcast stream, or through the assistance device, i.e., where the assistance device relays the broadcast stream to the hearing device. The scanning for advertisements may be performed by the hearing device, i.e. the hearing device may be configured for scanning for advertisements of available broadcasted audio streams, and/or the scanning for advertisements may be performed by the assistance device, i.e. the hearing device may be configured for initiating a scanning for advertisements of available broadcasted audio streams performed by the assistance device, e.g. by sending instructions to the assistance device to perform a scanning for advertisements.

It is noted that the movement sensor or movement sensors of the hearing device detects movement of the hearing device and infers movement of the user therefrom. Movement of the user may thus include stationary movement of the user, e.g., the user picking up the hearing device while the user is standing/siting in the same location, and the user changing location both on their own motion, e.g., by walking, biking, etc., and facilitated motion, e.g., by car, mobility scooter, etc.

In the context of this text, advertisement is to be understood as information packets broadcasted by broadcasting devices that may be received without being paired with the broadcasting device, so that any potential listening devices may detect the broadcasting device and connect to it if a user wishes to do so. Such advertisements are often broadcasted at fixed time intervals, and in one or more frequency bands. Advertisements of available broadcasted audio streams typically include name, content, codec configuration, etc.

### BRIEF DESCRIPTION OF THE DRAWINGS

In the following, exemplary embodiments of the invention are described in more detail with reference to the appended drawings, wherein:
FIG. 1 shows a block diagram of a hearing device according to the invention,
FIGS. 2 and 3 show examples of hearing devices,
FIGS. 4 and 5 show hearing systems of the invention and broadcasting devices
FIG. 6 illustrates an assistance device presenting broadcast information, and
FIG. 7 shows a flow chart of a method scanning for broadcasted streams.

### DETAILED DESCRIPTION

In the following various exemplary embodiments of the disclosed method of providing a broadcasted audio stream using a hearing device configured for being worn at an ear of a user and an assistant device, and a hearing device comprising a wireless communication unit configured to scan for advertisements of available broadcasted audio streams and an associated audio streaming protocol are described with reference to the appended drawings. The skilled person will understand that the accompanying drawings are schematic and simplified for clarity and therefore merely show details which are essential to the understanding of the invention, while other details have been left out. The elements shown in the drawings are not necessarily drawn to scale, but may primarily be illustrative of relative position, orientation, and function. Like reference numerals refer to like elements throughout. Like elements will therefore not necessarily be described in detail with respect to each figure.

The hearing device may scan for advertisements and provides broadcast information to an assistant device, e.g., a smartphone, or the like. The assistant device may be a smartphone, smartwatch, tablet, computer, or the like. Communication between the hearing device and the assistant device may be facilitated by any of various known wireless communication protocols. For example, the user-selection information may be transmitted via any of various known communication protocols such as e.g., Bluetooth, Wi-Fi, or NFC. These are common wireless communication technologies that can facilitate the transmission of information between the assistant device and the hearing device.

The assistant device may provide a user interface to enable a user to select a broadcast to listen to. The assistance device may during use act as an intermediate device to relay a broadcast chosen by the user to the hearing device or it may provide the hearing device with user-selection indicating a broadcast chosen by the user, whereby the hearing device may connect to a broadcast device based on the user-selection information. When the hearing device receives the user-selection information it joins the selected broadcast and provides the audio stream to the user of the hearing device.

In some embodiments, the assistant device does not need to have the capability and/or programming needed to perform a scan for advertisements, as the hearing device may be configured for performing the scanning for advertisements. Thus, a user of the hearing device may e.g., use a simpler assistant device. Further, the hearing device does not need to be configured for presenting an overview of available broadcasted audio streams, for example via a user interface on the hearing device. Further, the user of the hearing device and the user of the assistant device may be different; This allows for the user of the assistant device to aid the user of the hearing device.

In some embodiments, the method further comprises the hearing device being connected with the assistant device via a wired and/or a wireless connection, such as via a Bluetooth connection.

Presenting the available broadcasted audio streams may be done as text, e.g., as a list of some form, or using other forms of presentation information such as e.g., graphics, audio, haptics, etc. The assistant device may present the available broadcasted audio streams to a user as a list, such as a list that is provided in a GUI or which is read out loud.

In some embodiments, connection between the hearing device and the assistant device is maintained during the scanning for advertisements.

In some embodiments, the scanning for advertisements is performed for a scan duration being a limited period of time, such as for a pre-determined period of time and/or for a user-selected period of time. In some embodiments, the scan duration is set by the user actively interacting with the assistant device or with the hearing device, such as for a duration of time during which a user is actively requesting a scan. For example, the duration of time could be set by a user holding down a physical or virtual button on the assistant device or on the hearing device. In a preferred embodiment, the duration of time is set by a user holding down a virtual button in an app on the assistant device. Thus, the user may set the intended duration of scanning.

In some embodiments, the scanning for advertisements further comprises the hearing device determining active processes running on the hearing device, and, optionally, the hearing device further determining whether to stop or pause one or more active processes. The determination on active processes may be made prior to the scanning being initiated or it may be made during the scan. In this way, the hearing device may pause or stop active processes, such as active battery-requiring processes, during the scan for broadcasts, for example to ensure that enough power is available to perform the scan, and/or to conserve battery power, and/or to free up resources such as memory, or other. A paused process may be paused for the scan duration and automatically resumed subsequently, for example just after the scan is finished or a set time after the scan is finished. In some embodiments, the step of scanning for advertisements further comprises the hearing device stopping or pausing any audio streaming it was providing when it initiates the scanning for advertisements. In some embodiments, determining active processes comprises determining battery-drain data for one or more of the active processes, where the battery-drain data may comprise one or more of: how much power is being drained by the active process, and/or an estimate of the battery requirement for the continued running of the active process. In some embodiments, the determination of whether to pause one or more active processes is based at least partially on the battery-drain data. The determination of whether to pause one or more active processes may additionally, or optionally, be based at least partially on available battery power.

In some embodiments, the method further comprises sending a scan request, from the hearing device to the assistance device, and the step of scanning for advertisements further comprising the scanning being initiated in response to the scan request and performed by the assistance device.

In some embodiment, the hearing device is configured to scan for advertisements of available unencrypted broadcasted audio streams, and optionally also an associated audio streaming protocol. The hearing device may be configured to scan for both encrypted and unencrypted broadcasted audio streams. The hearing device and/or the assistant device may be configured to provide an interface for inputting a password.

The scanning for advertisements may be initiated when the movement data indicates that the user has changed location, such as when the movement data indicates that the user has moved over a threshold distance from a position of the latest scanning for advertisements. The threshold distance may be above 3 meters, 5 meters, 10 meters, 15 meters, or 20 meters. This will facilitate switching between broadcast devices broadcasting the same audio stream while the user is on the move, thereby allowing seamless switching between the broadcast devices resulting in a continuous broadcast stream for the user.

The scanning for advertisements may be initiated when the movement data indicates that the hearing device is moving vertically and/or horizontally. As vertical movement of the hearing device can be a good indicator that the user has picked up their hearing device for use, it can advantageously be used as an indicator that a scanning for advertisements should be initiated. Likewise, horizontal movement of the hearing device may indicate that the user is on the move and may therefore move out of range of a current broadcasting device and can advantageously be used as an indicator that a scanning for advertisements should be initiated.

The scanning for advertisements may be initiated when the movement data indicates that the hearing device is moving faster than a speed threshold. The speed threshold may be above 0.3m/s, 0.5m/s, 0.75m/s, or 1 m/s. By limiting the hearing device to only initiating the scanning for advertisements when the movement data indicates that the hearing device is moving faster than a speed threshold it may be avoided that the hearing device initiates a scan based on a false positive of the movement data.

The movement sensor may comprise one or more of the following an accelerometer, a gyroscope, a magnetometer, or a GPS module. Such detectors or combination of detectors may reliably detect movement of the hearing device to provide movement data indicating movement of the user.

The hearing device is configured to be worn by a user. The hearing device may be arranged at the user's ear, on the user's ear, over the user's ear, in the user's ear, in the user's ear canal, behind the user's ear and/or in the user's concha, i.e., the hearing device is configured to be worn in, on, over and/or at the user's ear. The user may wear two hearing devices, one hearing device at each ear. The two hearing devices may be connected, such as wirelessly connected and/or connected by wires, such as a binaural hearing aid system.

The hearing device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

The hearing device may be embodied in various housing styles or form factors. Some of these form factors are Behind-the-Ear (BTE) hearing device, Receiver-in-Canal (RIC) hearing device, Receiver-in-Ear (RIE) hearing device or Microphone-and-Receiver-in-Ear (MaRIE) hearing device. These devices may comprise a BTE unit configured to be worn behind the ear of the user and an in the ear (ITE) unit configured to be inserted partly or fully into the user's ear canal. Generally, the BTE unit may comprise at least one input transducer, a power source and a processing unit. The term BTE hearing device refers to a hearing device where the receiver, i.e. the output transducer, is comprised in the BTE unit and sound is guided to the ITE unit via a sound tube connecting the BTE and ITE units, whereas the terms RIE, RIC and MaRIE hearing devices refer to hearing devices where the receiver may be comprise in the ITE unit, which is coupled to the BTE unit via a connector cable or wire configured for transferring electric signals between the BTE and ITE units.

Some of these form factors are In-the-Ear (ITE) hearing device, Completely-in-Canal (CIC) hearing device or Invisible-in-Canal (IIC) hearing device. These hearing devices may comprise an ITE unit, wherein the ITE unit may comprise at least one input transducer, a power source, a processing unit and an output transducer. These form factors may be custom devices, meaning that the ITE unit may comprise a housing having a shell made from a hard material, such as a hard polymer or metal, or a soft material such as a rubber-like polymer, moulded to have an outer shape conforming to the shape of the specific user's ear canal.

Some of these form factors are earbuds, on the ear headphones or over the ear headphones. The person skilled in the art is well aware of different kinds of hearing devices and of different options for arranging the hearing device in, on, over and/or at the ear of the hearing device wearer. The hearing device (or pair of hearing devices) may be custom fitted, standard fitted, open fitted and/or occlusive fitted.

In some embodiments, the hearing device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In some embodiments, the hearing device may comprise one or more antenna(s) configured for wireless communication. The one or more antenna(s) may comprise an electric antenna. The electric antenna may be configured for wireless communication at a first frequency. The first frequency may be above 800 MHz, preferably a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antenna(s) may comprise a magnetic antenna. The magnetic antenna may comprise a magnetic core. The magnetic antenna may comprise a coil. The coil may be coiled around the magnetic core. The magnetic antenna may be configured for wireless communication at a second frequency. The second frequency may be below 100 MHz. The second frequency may be between 9 MHz and 15 MHz.

The hearing device comprises one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communication units is configured to scan for advertisements of available broadcasted audio streams and an associated audio streaming protocol. At least one of the one or more wireless communication units is configured to transmit the broadcast information to an assistant device. At least one of the one or more wireless communication units is configured to receive a broadcasted audio stream.

At least one of the one or more wireless communication unit(s) may be coupled to the one or more antenna(s). The wireless communication unit may be configured for converting a wireless signal received by at least one of the one or more antenna(s) into a second electric input signal. The hearing device may be configured for wired/wireless audio communication, e.g., enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from another hearing device, e.g., as part of a binaural hearing system and/or from one or more accessory device(s), such as a smartphone and/or a smart watch.

The hearing device includes a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s).

The hearing device comprises an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g., Receiver-in-Ear (RIE) unit or Microphone-and-Receiver-in-Ear (MaRIE) unit, of the hearing device. One or more of the input transducer(s) may be comprised in an ITE unit or in an earpiece.

In some embodiments, a wireless communication unit may be configured for converting the second electric output signal into a wireless output signal. The wireless output signal may comprise synchronization data. At least one wireless communication unit may be configured for transmitting the wireless output signal via at least one of the one or more antennas.

In some embodiments, the hearing device may comprise a digital-to-analogue converter configured to convert the first electric output signal, the second electric output signal and/or the wireless output signal into an analogue signal.

In some embodiments, the hearing device may comprise a vent. A vent is a physical passageway such as a canal or tube primarily placed to offer pressure equalization across a housing placed in the ear such as an ITE hearing device, an ITE unit of a BTE hearing device, a CIC hearing device, a RIE hearing device, a RIC hearing device, a MaRIE hearing device or a dome tip/earmold. The vent may be a pressure vent with a small cross section area, which is preferably acoustically sealed. The vent may be an acoustic vent configured for occlusion cancellation. The vent may be an active vent enabling opening or closing of the vent during use of the hearing device. The active vent may comprise a valve.

In some embodiments, the hearing device may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

In some embodiments, the hearing device may comprise a memory, including volatile and nonvolatile forms of memory.

In some embodiments, the associated audio streaming protocol is a Bluetooth audio streaming protocol, such as Bluetooth LE Audio. In some embodiments, the hearing device is further configured for being paired with the assistant device, such as via Bluetooth pairing. In some embodiments, the hearing device is further configured to maintain pairing between the hearing device and the assistant device during a scan for advertisements.

In some embodiments, the hearing device is further configured to perform a scan for advertisements the scanning for advertisements is performed for a scan duration, the scan duration being a limited period of time, such as for a pre-determined period of time and/or for a user-selected period of time. In some embodiments, the hearing device is further configured to perform a scan for advertisements exclusively for a duration of time during which the assistant device is requesting, such as intermittently requesting, a scan or for at duration of time during which a user is actively interacting with the hearing device.

In some embodiments, the hearing device is further configured to determine active processes running on the hearing device, and, optionally, the hearing device is further configured to determine whether to pause one or more active processes. The determination on active processes may be made prior to the scanning being initiated or it may be made during the scan. In this way, the hearing device may pause or stop active processes, such as active battery-requiring processes, during the scan for broadcasts, for example to ensure that enough power is available to perform the scan, and/or to conserve battery power, and/or to free up resources such as memory, or other. A paused process may be paused for the duration of the scan and automatically resumed at a time after the scan is finished, for example just after the scan is finished and/or a set time after the scan is finished. In some embodiments, the hearing device is further configured to stop or pause any audio streaming it was providing when a scan for advertisements is initiated. In some embodiments, the hearing device is further configured to determine battery-drain data for one or more of the active processes, where the battery-drain data may comprise one or more of: how much power is being drained by the active process, and/or an estimate of the battery requirement for the continued running of the active process. In some embodiments, the determination of whether to pause one or more active processes is based at least partially on the battery-drain data. The determination of whether to pause one or more active processes may be based at least partially on available battery power.

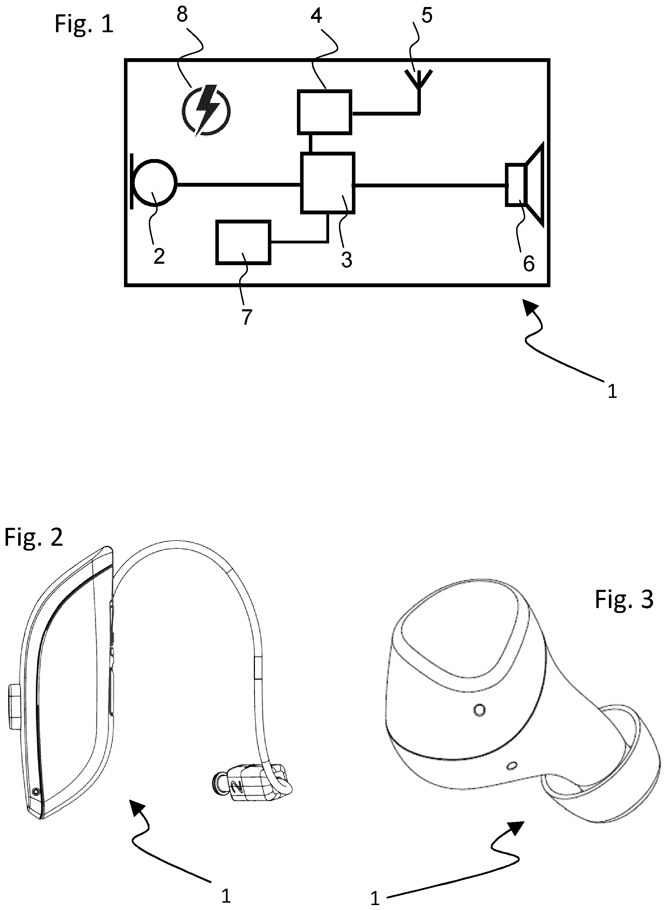

**FIG. 1** shows a block diagram of a hearing device 1 according to the invention. The hearing device 1 comprises one or more input transducers 2, such as a microphone and/or bone vibration sensor, for capturing an acoustic signal and providing a first electric input signal based on the captured acoustic signal. The hearing device 1 comprises a wireless communication unit 4, such as a radio, a transceiver, or receiver-transmitter pair, connected to an antenna 5 to provide the hearing device 1 with wireless communication capabilities. The wireless communication unit 4 and the antenna 5 can receive wireless signal and provide a second electric input signal based on the received wireless signal. The hearing device 1 comprises a processing unit 3 connected to the input transducer 2 and the wireless communication unit 4 and is configured for signal processing to provide a first electric output signal based on the first electric input signal and/or the second electric input signal. The hearing device 1 comprises an output transducer 6, such as a miniature speaker, also know as a receiver in hearing aid terminology. The output transducer 6 is configured for providing an acoustic output signal based on the first electric output signal. Some hearing devices 1 further comprises an energy source 8, such as a battery, configured for providing the other electrical components with energy. The energy sources may be provided be a rechargeable battery, such as a Li-Ion battery, or a single use battery, such as a Zinc-air battery.

The hearing device 1 further comprises one or more movement sensor(s) 7, such as an accelerometer, a gyroscope, a magnetometer, and/or a GPS module, configured for detecting movement of the hearing device 1. Based on detections, the movement sensor(s) 7 provide movement data indicative of user movement, e.g., vertical movement, when the user is standing or sitting, or horizontal movement, when the user is walking. The movement sensor(s) 7 are connected to the wireless communication unit 4, optionally through the processing unit 3, so that the hearing device 1 may initiate a scanning for advertisements of available broadcasted audio streams based on the provided movement data, e.g., when the movement data indicates that the user is walking to a new location.

It is noted that there may be two hearing devices 1 so that a binaural set of hearing devices 1 is provided. When two hearing devices are provided 1, they may be wirelessly connected to each other, e.g., through the antenna 5 or through a secondary magnetic antenna (not shown).

**FIG. 2** shows an example of a hearing device 1 according to the invention, in the form of a receiver in ear, RIE, hearing aid also known as receiver in canal, RIC, hearing aid. The hearing device 1 comprises a behind the ear module configured for placement behind the pinna of the user. The behind the ear module comprises some of electronic components such as the processing unit 3, or part of the processing unit 3, one or more input transducer(s) 2, e.g., microphone(s), a wireless communication unit 4. The hearing device further comprises an in the ear module configured for placement in the ear canal of the user. The in the ear module comprises the output transducer 6. The in the ear module may further comprise a part of the processing unit 3, one or more input transducer(s) 2, e.g., microphone(s).

**FIG. 3** shows an example of a hearing device 1 according to the invention, in the form of an earbud configured for placement in the user's ear canal and concha.

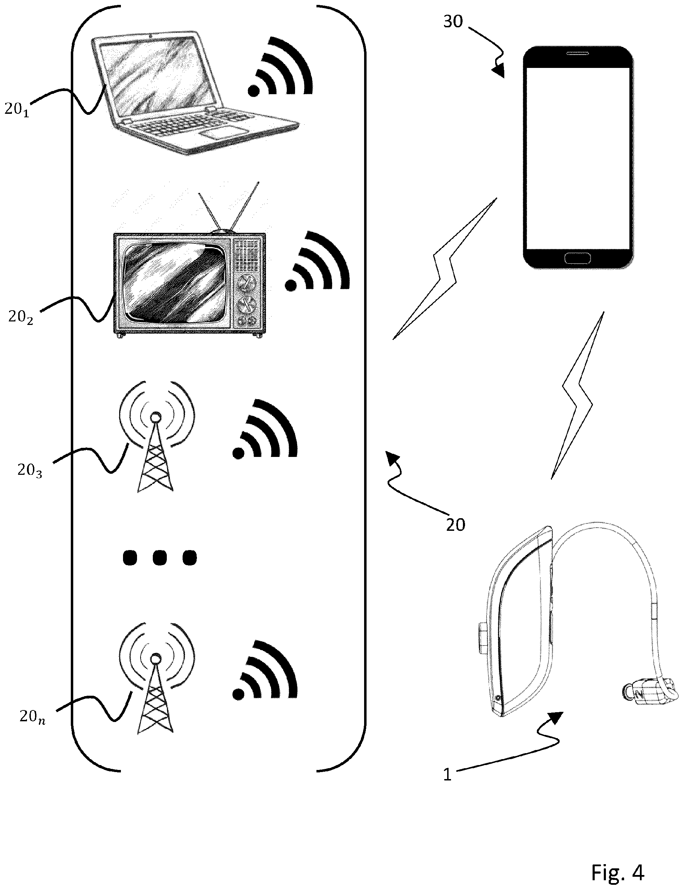

**FIG. 4** shows a hearing system comprising a hearing device 1 according to the invention and an assistance device 30 in the form of a smart phone, and a plurality of broadcast devices 20. The plurality of broadcast devices 20 comprises a number of individual broadcast devices 20₁, 20₂, 20₃, ..., 20ₙ. two or more of the broadcast devices 20 may broadcast the same audio stream but from different location so as to increase the area of coverage. Some of the broadcast devices 20 may broadcast multiple audio streams and may thus broadcast multiple advertisements, i.e., one for each broadcasted audio stream.

The hearing device 1 is wirelessly connected to the assistance device 30. Furthermore, the hearing device 1 may listen, i.e., receive, to a broadcasted audio stream broadcasted by one of the broadcast devices 20. In this context it is noted that the connection between the hearing device 1 and the assistance device 30 is usually one where the two are paired, i.e., a trusted bond between the two has been generated, so that the hearing device 1 and the assistance device 30 may exchange data wirelessly between each other. When listening to a broadcasted audio stream the hearing device 1 or the assistance device 30 need not be paired with the broadcasting device 20ₓ broadcasting the audio stream, as this may be a one directional exchange of data where the hearing device 1 or assistance device 30 does not interact or identify itself to the broadcasting device 20ₓ. It is however not excluded that hearing device 1 and the assistance device 30 may be paired with a broadcasting device 20ₓ.

The scanning for advertisements of available broadcasted audio streams may be performed by either the hearing device 1 or the assistance device 30. Thus, when the movement data indicates that the user is moving, e.g., is moving above a speed threshold or has moved beyond a distance threshold, the hearing device 1 will initiate a scanning for advertisements of available broadcasted audio streams by either performing it by itself or by transmitting instructions to the assistance device 30 to perform the scanning for advertisements.

When selecting an audio stream to listen in on, the hearing device 1 may stream the content of the audio stream to the user either by using the antenna 5 of the hearing device 1 directly, i.e., the hearing device 1 itself receives the broadcast stream directly from the broadcasting device 20ₓ, or the hearing device 1 may use the assistance device 30 as a relay, i.e., the assistance device 30 receives the broadcast stream and forwards it to the hearing device 1.

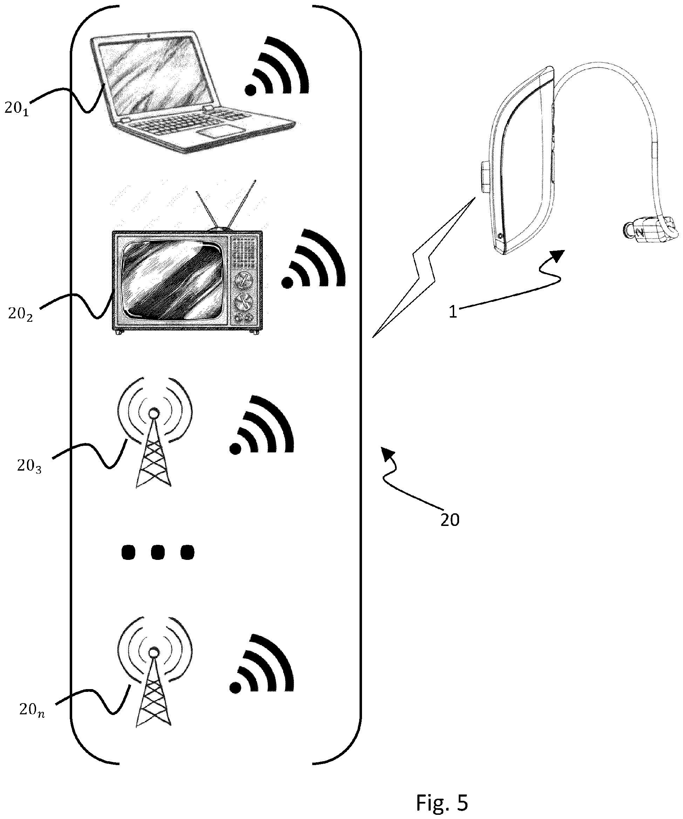

**FIG. 5** shows a hearing system similar to the one shown in FIG. 4, but where the assistance device 30 is omitted. In this system scanning for advertisements and listening to a selected broadcast stream is perform by the hearing device 1 itself without the assistance device 30 as an intermediary device.

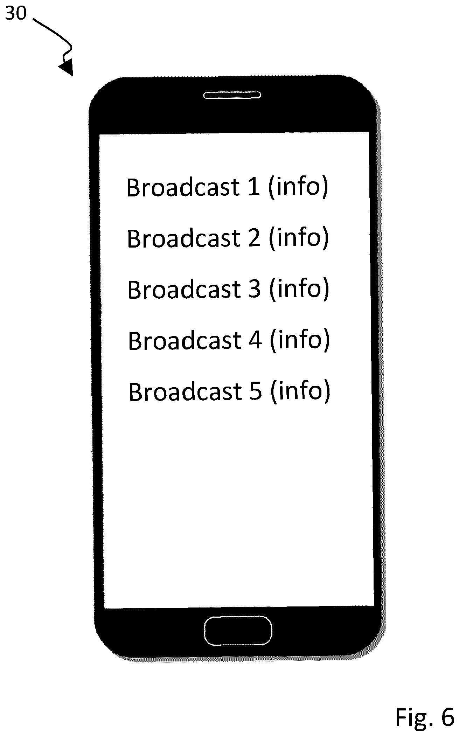

**FIG. 6** shows how the assistance device 30 may be used to select a broadcast stream after the scanning for advertisements has identified the available broadcasting devices 20. While the hearing device 1 may present information to the user in the form of audio information it is often more desirable to present information on available broadcasted audio streams visually, e.g., by showing it on a screen of the assistance device 30. The user may then select an available broadcasting device 20ₓ from the list, and then the hearing device 1 may listen to the selected audio stream either directly or using the assistance device 30 as a relay.

As shown in the figure, the advertisements may comprise basic information about the audio steam, e.g., a title or a short description on the content, as well as information identifying the broadcasting device 20ₓ broadcasting the broadcasted stream.

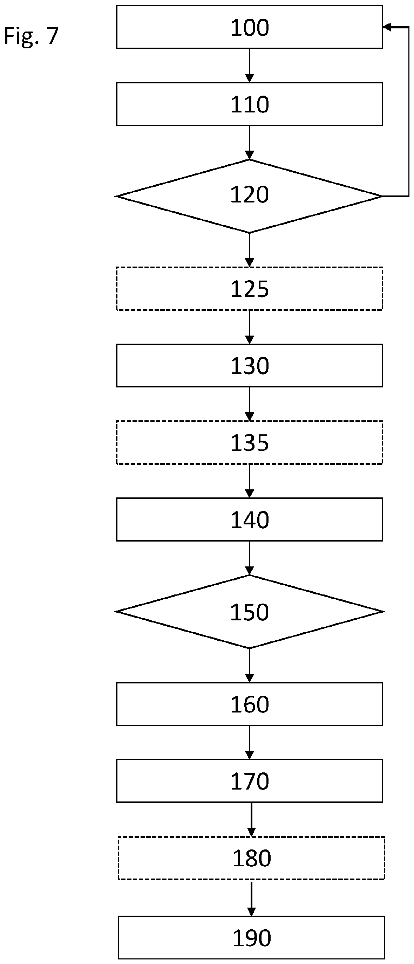

**FIG. 7** shows a flow diagram illustrating a method of providing a broadcasted audio stream according to some embodiments. The method comprises detecting 100 movement of the hearing device, and thereby also the user, using a movement sensor 7 in the hearing device 1. The method comprises providing 110 movement data based on the detection of movement, or lack thereof. Determine 120 if the movement data indicates movement of the user, if it does not resume the step of detecting 100 movement.

If the step of determining 120 if the movement data indicates movement of the user indicates movement, the method may optionally comprise pausing 125 one or more non-essential processes of the hearing device 1, e.g., wireless binaural communication with another hearing device, for some hearing devices 1 this may be necessary because the battery cannot support normal operation while scanning for advertisements. If the step of determining 120 if the movement data indicates movement of the user indicates movement, the method comprises scanning 130 for advertisements of available broadcasted audio streams and thereby obtaining broadcast information comprising data on available broadcasted audio streams. This step may be performed by the hearing device 1 using the antenna 5, or by the assistance device 30. Optionally, if one or more non-essential processes were paused, the method may comprise resuming 135 the one or more non-essential processes.

The method comprises presenting 140 the available broadcasted audio streams to a user based on the received broadcast information obtained by the scanning 130 for advertisements, either by the hearing device 1 or the assistance device 30. This step may optionally comprise transmitting the received broadcast information from the hearing device 1 to the assistance device 30 if the scanning 130 for advertisements was performed by the hearing device and the presenting 140 the available broadcasted audio streams is performed by the assistance device 30.

At this stage, a selection 150 of one of the available broadcasted audio streams by the user is awaited. The user may indicate a selection amongst the available broadcasted audio streams by an interface of the hearing device 1, e.g., a push button, or by an interface of the assistance device 30, e.g., a touch screen. Once the user has selected an available broadcasted audio streams they want to listen to, the method comprises obtaining 160 user-selection data indicative of a broadcasted audio stream selected by the user, based on input provided by the user.

The method comprises, based on the user-selection data receiving 170 an audio stream broadcasted by the broadcasting device 20ₓ selected by the user. This step may be performed by the hearing device 1 directly, by receiving the broadcasted audio stream using the antenna 5, or by the assistance device 30, which may subsequently forward the received audio stream to the hearing device through the wireless connection between the hearing device 1 and the assistance device 30. If selection 150 of one of the available broadcasted audio streams is performed by the assistance device 30, while receiving 170 an audio stream broadcasted by the broadcasting device 20ₓ is performed by the hearing device 1, the method may comprise transferring the user-selection from the assistance device 30 to the hearing device 1.

Optionally, the method comprises processing 180 the received audio stream by the processing unit 3. The processing 180 of the received audio stream may comprise applying frequency dependent gain based on two or more gain parameters set in dependence of the user's hearing profile to compensate for a hearing disability of the user. The processing 180 of the received audio stream may comprise mixing the received audio stream with an electrical input signal obtained by the one or more input transducer(s) 2.

The method comprises providing 190 an acoustic output signal using the output transducer 6 based on the received audio stream.

In step 130, the scanning for advertisements of available broadcasted audio streams may be performed for a scan duration being a limited period of time, such as for a pre-determined period of time and/or for a user-selected period of time.

In step 150, the assistant device awaits a user of the device selecting one of the presented available broadcasted audio streams. The user-selection of a broadcasted audio stream may be made via any of well-known interfaces such as a touch interface, voice command, and/or gesture control. The assistant device, or the hearing device, may provide a mechanism on the device, e.g., a button, a swipe, a switch, or the like, which the user may utilise to select a broadcast.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### LIST OF REFERENCES

- 1: Hearing device
- 2: Input transducer
- 3: Processing unit
- 4: Wireless communication unit
- 5: Antenna
- 6: Output transducer
- 7: Movement sensor
- 8: Energy source
- 20: Broadcasting devices
- 20ₓ: Broadcasting device
- 20,: Broadcasting device
- 20₂: Broadcasting device
- 20₃: Broadcasting device
- 20ₙ: Broadcasting device
- 30: Assistance device
- 100: Detecting movement
- 110: Providing movement data based on the detection of movement
- 120: Determine if the movement data indicates movement of the user
- 125: Stop/pause non-essential process(es)
- 130: Scanning for advertisements of available broadcasted audio streams
- 135: Resuming the one or more non-essential process(es)
- 140: Presenting the available broadcasted audio streams to a user
- 150: Selection of one of the available broadcasted audio streams by the user
- 160: Obtaining user-selection data
- 170: Receiving an audio stream
- 180: Processing of the received audio stream
- 190: Providing an acoustic output signal

## Claims

1. **A hearing device (1) configured for being worn at an ear of a user,** the hearing device (1) comprising:
• an input transducer (2),
• a processing unit (3),
• an output transducer (6),
• a movement sensor (7) configured for obtaining movement data indicative of user movement,
• an antenna (5), and
• a wireless communication unit (4) coupled to the antenna (5),
wherein the hearing device (1) is configured to initiate a scanning for advertisements of available broadcasted audio streams, and
wherein scanning for advertisements is initiated based on the movement data.

2. A hearing device according to claim 1, wherein the scanning for advertisements is performed for a scan duration, the scan duration being a limited period of time.

3. A hearing device according to any of claims 1-2, wherein the hearing device is further configured to pause one or more active processes of the processing unit and/or one or more active processes of the wireless communication unit for the scan duration.

4. A hearing device according to any of claims 1-3, wherein the scanning for advertisements is initiated when the movement data indicates that the user has changed location.

5. A hearing device according to claim 4, wherein the hearing device is configured to initiate the scanning for advertisements when the movement data indicates that the user has moved over a threshold distance from a position of the latest scanning for advertisements.

6. A hearing device according to any of claims 1-5, wherein the movement sensor comprises one or more of the following:
- an accelerometer,
- a gyroscope,
- a magnetometer, or
- a GPS module.

7. A hearing device according to any of claims 1-6, wherein the hearing device is further configured for performing the scanning for advertisements.

8. **A method of providing a broadcasted audio stream using a hearing device (1) configured for being worn at an ear of a user, the method comprising:**
- detecting (100) movement of the user, using a movement sensor in the hearing device, for the provision of movement data indicative of user movement, and
- scanning (130) for advertisements of available broadcasted audio streams,
wherein the scanning for advertisements is initiated based on the movement data.

9. A method according to claim 8, wherein the scanning for advertisements is performed for a scan duration being a limited period of time.

10. A method according to any of claims 8-9, wherein the scanning for advertisements further comprises pausing one or more active processes.

11. A method according to any of claims 8-10, wherein the scanning for advertisements is initiated when the movement data indicates that the user has changed location.

12. A method according to claim 11, wherein the scanning for advertisements is initiated when the movement data indicates that the user has moved over a threshold distance from a position of the latest scanning for advertisements.

13. A method according to any of claims 8-12, wherein the scanning for advertisements further comprises the hearing device stopping or pausing any audio streaming it was providing when it initiates the scanning for advertisements.

14. A method according to any of claims 8-13, wherein the scanning for advertisements is performed by the hearing device.

15. A hearing system comprising a hearing device according any of claims 1-7 and an assistance device, the hearing device and the assistance device being configured for being wirelessly connected to each other.
